# EUROPEAN PATENT APPLICATION

(11) **EP 4 694 144 A1**
(43) Date of publication of application: **11.02.2026**
(21) Application number: 24778132.1
(22) Date of filing: 28.03.2024
(51) Int. Cl.: H04N 21/235, G06Q 30/0601, H04N 21/431

(54) **OBJECT MANAGEMENT METHOD, APPARATUS, AND DEVICE, MEDIUM, AND PROGRAM PRODUCT**

(30) Priority: 28.03.2023 CN 202310316842
(71) Applicant: BEIJING YOUZHUJU NETWORK TECHNOLOGY CO. LTD., Beijing 101299 (CN)
(72) Inventor: ZHANG, Hongyang, Beijing 100028 (CN)
(74) Representative: Isarpatent
(86) International application number: PCT/CN2024/084374
(87) International publication number: WO 2024/199346

(57) **Abstract**

The present application provides an object management method, apparatus, and device, a medium, and a program product. The method comprises: in response to a management trigger operation, determining a target management object, and displaying the target management object on an object display page; then obtaining target interaction information of the target management object, wherein the target interaction information is interactive behavior information collected for the target management object during display of the target management object on the object display page; and then determining a management result of the target management object according to the target interaction information of the target management object. The method can implement automatic management of objects without the need for users to manually add and analyze management objects, thereby saving time and labor and meeting different service needs.

## Description

The present application claims the priority of the Chinese Patent Application No. 202310316842.7 filed on March 28, 2023, the entire contents disclosed by the Chinese patent application are hereby incorporated by reference as a part of the present application.

### TECHNICAL FIELD

The present disclosure relates to an object management method, an apparatus, an electronic device, a computer-readable storage medium, and a computer program product.

### BACKGROUND

With rapid development of a computer technology, various applications (APPs) have emerged. In order to attract users or maintain user stickiness, an application provider provides an object management function, and a user may add a management object to share and recommend the management object to other users.

Specifically, in a short video, a live broadcast and other applications, a user (such as an anchor) may add a product through a product management function module (such as a product showcase), so that the other users (such as viewers) can view the product added by the anchor.

However, the user needs to manually add and manage the management object, which is time-consuming and labor-intensive. The resulting labor and time costs are extremely high, making it difficult to meet business needs.

### SUMMARY

The present disclosure provides an object management method. This method can automatically determine the management object and management result, thereby reducing the labor cost and time cost and meeting different business needs. The present disclosure also provides an apparatus corresponding to the above method, an electronic device, a computer-readable storage medium, and a computer program product.

At a first aspect, the present disclosure provides an object management method. The method includes:
in response to a management trigger operation, determining a target management object, and displaying the target management object on an object display page;
acquiring target interaction information of the target management object; where the target interaction information is interactive behavior information acquired for the target management object during a display process of the target management object on the object display page; and
determining a management result of the target management object according to the target interaction information of the target management object.

In some possible implementations, the determining a target management object includes:
determining a candidate management object set according to an account type of a trigger account corresponding to the management trigger operation; and
determining the target management object according to object attribute information of a candidate management object in the candidate management object set; where the target management object is at least one candidate management object in the candidate management object set.

In some possible implementations, the determining a candidate management object set according to an account type of a trigger account corresponding to the management trigger operation includes:
determining a target object type corresponding to the account type of the trigger account according to the account type of the trigger account corresponding to the management trigger operation; and
taking the candidate management object belonging to the target object type as the candidate management object set.

In some possible implementations, the object attribute information includes: object popularity information and historical interactive behavior information of the trigger account; and the determining the target management object according to object attribute information of a candidate management object in the candidate management object set; where the target management object is at least one candidate management object in the candidate management object set includes:
obtaining adaptation information of the candidate management object in the candidate management object set according to the object popularity information and the historical interactive behavior information of the trigger account of the candidate management object in the candidate management object set; where the adaptation information of the candidate management object reflects an adaptation degree of the candidate management object and the trigger account; and
determining the candidate management object of which adaptation information satisfies a preset condition as the target management object.

In some possible implementations, the method further includes:
in response to the trigger operation satisfying a result display condition, displaying the management result of the target management object on a result display interface;
the management result of the target management object includes: management basis information, a result indicator item, and management object information, and the result display interface includes: a basic information display region, an indicator item display region and a management object display region; the displaying the management result of the target management object on a result display interface, includes: displaying the management basis information in the basic information display region, displaying the result indicator item in the indicator item display region, and displaying the management object information in the management object display region.

In some possible implementations, the determining a management result of the target management object according to the target interaction information of the target management object includes:
classifying the target interaction information of the target management object according to a plurality of preset information types to obtain the target interaction information corresponding to various information types;
for each information type, determining the management result corresponding to the information type according to the target interaction information corresponding to the information type; and
taking a management result corresponding to the various information types as the management result of the target management object.

In some possible implementations, the method further includes:
receiving an adjustment operation for the target management object; and
if the target management object is in a managed state, in response to the adjustment operation, displaying prompt information on the result display interface, the prompt information including adjustment failure information.

In some possible implementations, the method further includes:
if a display time of the target management object on the object display page satisfies a preset duration,
determining a target management object to be replaced and a replacement candidate object according to the target interaction information of the target management object; and
replacing the target management object to be replaced with the replacement candidate object on the object display page.

In some possible implementations, the determining a target management object to be replaced and a replacement candidate object according to the target interaction information of the target management object includes:
determining an evaluation indicator value corresponding to the target management object according to the target interaction information of the target management object;
taking a target management object of which evaluation indicator value satisfies a condition of the object to be replaced as the target management object to be replaced; and
determining the replacement candidate object from the candidate management object set according to the target interaction information of the target management object.

At a second aspect, the present disclosure provides an object management apparatus. The apparatus includes:
a determining unit, configured to, in response to a management trigger operation, determine a target management object;
a display unit, configured to display the target management object on an object display page;
an acquiring unit, configured to acquire target interaction information of the target management object; where the target interaction information is interactive behavior information acquired for the target management object during a display process of the target management object on the object display page; and
the determining unit, further configured to determine a management result of the target management object according to the target interaction information of the target management object.

In some possible implementations, the determining unit is specifically configured to:
determine a candidate management object set according to an account type of a trigger account corresponding to the management trigger operation; and
determine the target management object according to object attribute information of a candidate management object in the candidate management object set; where the target management object is at least one candidate management object in the candidate management object set.

In some possible implementations, the determining unit is specifically configured to:
determine a target object type corresponding to the account type of the trigger account according to the account type of the trigger account corresponding to the management trigger operation; and
take the candidate management object belonging to the target object type as the candidate management object set.

In some possible implementations, the object attribute information includes: object popularity information and historical interactive behavior information of the trigger account; and the determining unit is specifically configured to:
obtain adaptation information of the candidate management object in the candidate management object set according to the object popularity information and the historical interactive behavior information of the trigger account of the candidate management object in the candidate management object set; where the adaptation information of the candidate management object reflects an adaptation degree of the candidate management object and the trigger account; and
determine the candidate management object of which adaptation information satisfies a preset condition as the target management object.

In some possible implementations, the display unit is configured to:
in response to the trigger operation satisfying a result display condition, display the management result of the target management object on a result display interface;
the management result of the target management object includes: management basis information, a result indicator item, and management object information, and the result display interface includes: a basic information display region, an indicator item display region and a management object display region; the displaying the management result of the target management object on a result display interface, includes: displaying the management basis information in the basic information display region, displaying the result indicator item in the indicator item display region, and displaying the management object information in the management object display region.

In some possible implementations, the determining unit is configured to:
classify the target interaction information of the target management object according to a plurality of preset information types to obtain the target interaction information corresponding to various information types;
for each information type, determine the management result corresponding to the information type according to the target interaction information corresponding to the information type; and
take a management result corresponding to the various information types as the management result of the target management object.

In some possible implementations, the apparatus includes:
a prompt unit, configured to receive an adjustment operation for the target management object; if the target management object is in a managed state, in response to the adjustment operation, display prompt information on the result display interface, the prompt information including adjustment failure information.

In some possible implementations, the apparats includes:
A replacement unit, configured to: if a display time of the target management object on the object display page satisfies a preset duration, determine a target management object to be replaced and a replacement candidate object according to the target interaction information of the target management object; and
the display unit is configured to replace the target management object to be replaced with the replacement candidate object on the object display page.

In some possible implementations, the replacement unit is specifically configured to: determine an evaluation indicator value corresponding to the target management object according to the target interaction information of the target management object;
take a target management object of which evaluation indicator value satisfies a condition of the object to be replaced as the target management object to be replaced; and
determine the replacement candidate object from the candidate management object set according to the target interaction information of the target management object.

At a third aspect, the present disclosure provides an electronic device, the electronic device includes a processor and a memory, the processor and the memory are communicated with each other. The processor is configured to execute instructions stored in the memory such that the electronic device performs the object management method according to the first aspect or any one of the implementations of the first aspect.

At a fourth aspect, the present disclosure provides a computer-readable storage medium, the computer-readable storage medium is stored with instructions, the instructions indicate the electronic device to perform the object management method according to the first aspect or any one of the implementations of the first aspect.

At a fifth aspect, the present disclosure provides a computer program product, where the computer program product, when running on an electronic device, causes the electronic device to perform the object management method according to the first aspect or any one of the implementations of the first aspect.

The present disclosure can be further combined to provide more implementations on the basis of the implementations provided by the above aspects.

### BRIEF DESCRIPTION OF DRAWINGS

In order to more clearly illustrate the technical method of the embodiments of the present disclosure, the accompanying drawings required for use in the embodiments will be briefly introduced below.
Fig. 1 is an architecture diagram of an object management system provided by an embodiment of the present disclosure;
Fig. 2 is a flow chart of an object management method provided by an embodiment of the present disclosure;
Fig. 3 is a schematic diagram of a product management interface provided by an embodiment of the present disclosure;
Fig. 4 is a schematic diagram of a showcase management interface provided by an embodiment of the present disclosure;
Fig. 5 is a schematic diagram of a product display page provided by an embodiment of the present disclosure;
Fig. 6A is a schematic diagram of a product showcase sharing interface provided by an embodiment of the present disclosure;
Fig. 6B is a schematic diagram of a product showcase sharing interface provided by an embodiment of the present disclosure;
Fig. 7A is a schematic diagram of a result display interface provided by an embodiment of the present disclosure;
Fig. 7B is a schematic diagram of a result display interface provided by an embodiment of the present disclosure;
Fig. 7C is a schematic diagram of a result display interface provided by an embodiment of the present disclosure;
Fig. 8 is a schematic diagram of a result display interface provided by an embodiment of the present disclosure;
Fig. 9 is a structural schematic diagram of an object management apparatus provided by an embodiment of the present disclosure; and
Fig. 10 is a structural schematic diagram of an electronic device provided in an embodiment of the present disclosure.

### DETAILED DESCRIPTION

The terms "first" and "second" in the embodiments of the present disclosure are only used for illustrative purposes and cannot be understood as indicating or implying relative importance or implicitly indicating the number of specified technical features. Therefore, the features defined as "first" and "second" may explicitly or implicitly include one or more of the features.

First, some technical terms involved in the embodiments of the present disclosure are introduced.

In order to attract users or maintain user stickiness, an application (APP) provider may provide an object management function in an application. A user may add a management object to share and recommend the management object to other users. For example, in a music APP, the user may add his favorite songs through a functional module "playlist sharing" or "playlist recommendation" to implement song recommendation and song management.

In a field of e-commerce, the user may also perform product management through the object management function. Where, e-commerce may be divided into traditional e-commerce and content e-commerce. In the traditional e-commerce, a buyer may search for a certain product through an e-commerce APP, and then complete purchase of the product by comparing product information of multiple merchants. In the content e-commerce, a merchant may increase a buyer's interest in purchasing a product by spreading attractive product content (such as text, video, etc.), thereby attracting the buyer to purchase the product.

It is illustrated by taking a short video, a live broadcast APP as examples. In the short video and live broadcast APP, a user (such as an anchor or a merchant) may use the product management function to carry out live commerce (specifically, use his own influence to help sell products). Specifically, the anchor may add a product through the product management function (such as a product showcase), and other users (such as viewers or buyers) may browse the product in the product showcase by viewing the anchor or merchant's product showcase, so as to complete the purchase of the product.

However, the user needs to manually add and manage the management object. For example, the anchor or merchant needs to manually select products to be added to the product showcase, and manually update products in the product showcase according to transaction information of the products. Such a method is time-consuming and labor-intensive, resulting in extremely high labor and time costs, which is difficult to meet business needs.

In view of the above, an embodiment of the present disclosure provides an object management method. The method involves, in response to a management trigger operation, automatically determining a target management object, and displaying the target management object on an object display page; and then acquiring interactive behavior information for the target management object, i.e., target interaction information, during a display process of the target management object; and determining a management result based on the target interaction information. In this way, automatic management of the object may be implemented without the need for the user to manually add and analyze the management object, which saves time and labor and can meet different business needs.

In order to make the technical solution of the present disclosure clearer and easier to understand, a system architecture of the object management method provided by the embodiment of the present disclosure is introduced below in conjunction with the accompanying drawings.

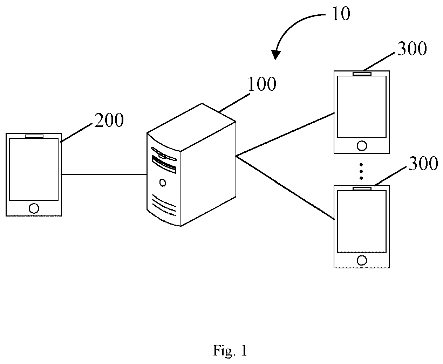

Referring to an architecture schematic diagram of an object management system shown in Fig. 1, an object management system 10 may include a server 100 and at least one client connected to the server 100, such as a first client 200. Where, the server 100 is a server with an object management function, for example, an application server with an object management function, including but not limited to a live broadcast application server and a short video application server. The first client 200 is a client corresponding to a user who performs a management trigger operation. In some examples, the first client 200 may be a client corresponding to an anchor or a merchant. Further, the object management system 10 may also include at least one second client 300. The second client 300 is a client corresponding to a user who interacts with a target management object. For example, the second client may be a client corresponding to a viewer or a buyer.

The user may perform the management trigger operation through the first client 200, and the server 100 may determine the target management object in response to the management trigger operation, and the target management object may be displayed on an object display page. Other users may load the object display page through a corresponding client (such as the second client 300) to view the target management object. During the display process of the target management object on the object display page, the other users may interact with the target management object through the second client 300. The server 100 may acquire interactive behavior information for the target management object, thereby obtaining the target interaction information of the target management object, and determine a management result of the target management object according to the interactive information of the target management object to implement object management.

In some possible implementations, the user may also perform a trigger operation through the first client 200, and the server 100 may, in response to the trigger operation satisfying a result display condition, display the management result of the target management object on a result display interface of the first client 200, so that the user may view the management result through the first client 200.

The server 100 may also record a display time of the target management object on the object display page. When the display time satisfies a preset duration, the server 100 may also replace (also referred to as substitute, update) the target management object. Specifically, the server 100 may determine the target management object to be replaced and a replacement candidate object for replacement according to the target interaction information of the target management object, and replace the target management object to be replaced with the replacement candidate object on the object display page, thereby implementing update of the target management object.

Fig. 1 is illustrated by taking the object management system 10 being a hardware system as an example. The server 100 in Fig. 1 may be a cloud server, such as a central server in a cloud computing cluster, or an edge server in an edge computing cluster, or a server in a local data center (referred to as a local server). Where, the local data center refers to a data center directly controlled by the user. The first client 200 and the second client 300 in Fig. 1 are client devices, such as terminals such as a smartphone, a tablet computer, and a laptop, with a client deployed thereon. In other possible implementations of the embodiment of the present disclosure, the object management system 10 may also be a software system, which may be deployed in a computing device cluster, for example, distributedly deployed in servers and terminals, and the computing device cluster performs the object management method provided by the embodiment of the present disclosure by executing program codes of the software system.

It should be noted that Fig. 1 shows the first client 200 and the second client 300 respectively. In some possible implementations, functions of the first client 200 and the second client 300 may also be integrated. In this way, the second client 300 may also display the target management object on the object display page, and the first client 200 may also support the execution of interactive behavior for the target management object.

The object management system 10 for performing the object management method is introduced above. Based on the above object management system 10, the present disclosure further provides an object management method. Hereinafter, the object management method provided by the present disclosure will be described in detail in conjunction with an embodiment.

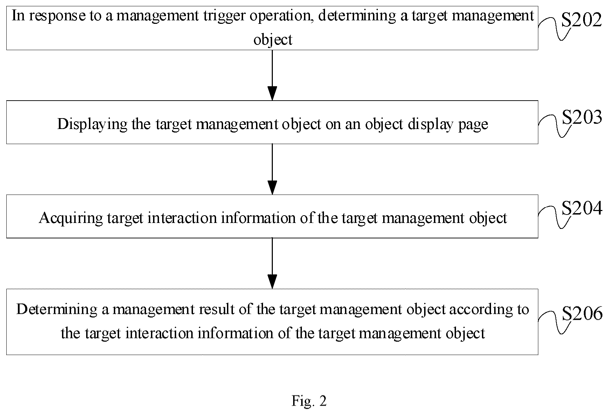

Referring to a flow chart of an object management method shown in Fig. 2, the method includes:
S202: in response to a management trigger operation, determining a target management object.

The management object refers to an object that supports automatic management and does not require manual management. In different application scenarios, management objects may be different. For example, in a live broadcast application and a short video application, the management object may be a product. For another example, in a streaming media application, the management object may be streaming media data such as songs and videos.

The target management object may be one or more objects selected for automatic management from a large number of management objects. The target management object may often be a management object with specific attribute information. For example, in the live broadcast application and the short video application, the target management object may be a beauty product and a maternal or infant product. For another example, in a streaming media application, the management object may be a pop song released by a record company.

The management trigger operation is an operation that triggers an automatic management function (also referred to as a hosting function). The management trigger operation may be different according to different trigger methods. For example, the management trigger operation may include one or more of an operation of clicking a management control by a mouse, an operation of touching the management control, a shortcut key operation, and a voice command trigger operation.

When the target management object is being determined, a candidate management object set may be determined according to an account type of a trigger account corresponding to the management trigger operation, and then the target management object is determined according to object attribute information of a candidate management object in the candidate management object set. The target management object is at least one candidate management object in the candidate management object set, for example, a management object of which object attribute information satisfies a preset condition (such as having specific attribute information) selected from the candidate management object set.

The trigger account refers to an account that performs the trigger management operation. The account type may include a category identifier obtained by classifying the account from at least one dimension. In some possible implementations, when the account is a new account, the account type may be determined according to a field in account registration information. For example, if the field in the account registration information is beauty product, the account type may be determined to be beauty product. In other implementations, when the account is not a new account, the account type may be determined in combination with content shared by the account. For example, if the content shared by an account mainly involves a field of food, the account type of the account may be determined as food. Furthermore, the account type may be further subdivided into subtypes, for example, gourmet food may be divided into Chinese food and Western food, and the beauty product may be divided into skin care and makeup. When the account type of the trigger account corresponding to the management trigger operation is being obtained, the target object type corresponding to the account type of the trigger account may be determined according to the account type of the trigger account corresponding to the management trigger operation, and then candidate management objects belonging to the target object type are used as the candidate management object set. Where, the target object type may be an object type that matches the account type. For example, when the account type is gourmet food, the object type may include one or more of finished food, semifinished food (such as food to be processed), and food raw materials.

The object attribute information may be information describing the management object. In some possible implementations, the object attribute information may include object popularity information and historical interactive behavior information of the trigger account. Where, the object popularity information is information describing a degree of interest in the management object, for example, it may be represented by a number of times for display (also referred to as a number of exposures, an amount of exposure). Furthermore, when the management object supports transaction, the object popularity information may also include transaction information, such as a transaction volume and a subscription volume. The historical interactive behavior information of the trigger account refers to interactive behavior information of the trigger account on the management object in a historical time period. For example, the historical interactive behavior information of the trigger account may include management objects displayed by the trigger account in the historical time period. Taking the live broadcast application or the short video application as an example, the historical interactive behavior information of the trigger account may include products that the trigger account has put on the shelves through the product showcase in the historical time period.

In this way, when the target management object is being determined, adaptability information of a candidate management object in the candidate management object set may be obtained first according to the object popularity information of the candidate management object in the candidate management object set and the historical interactive behavior information of the trigger account. Where, the adaptability information of the candidate management object reflects an adaptability of the candidate management object to the trigger account. Then, a candidate management object of which adaptation information satisfies a preset condition may be determined as the target management object.

In a specific implementation, the candidate management object may be matched with the management object displayed by the trigger account in the historical time period. If the match is successful, the adaptability information of the candidate management object in the candidate management object set may be obtained according to popularity information of successfully matched candidate management objects. Where, a management object with higher popularity among the successfully matched candidate management objects may obtain a higher adaptation score or rating. In other words, among the successfully matched candidate management objects, the higher the popularity, the higher the adaptation, and vice versa, the lower the popularity, the lower the adaptation. The adaptability information may be represented by the adaptability score or rating. The preset condition may be that the adaptability score is greater than a preset score, the adaptability score ranks in top n, or the adaptability rating is greater than a preset level. By comparing the adaptation information of the successfully matched candidate management objects, such as the adaptation score and the adaptation rating, with the above preset condition, when the preset condition is satisfied, a corresponding candidate management object is determined as the target management object.

It should be noted that, in some cases, the management object displayed by the trigger account in the historical time period is null, then the adaptability information of the candidate management object in the candidate management object set may be directly obtained according to the popularity information of the candidate management object, and then a candidate management object of which adaptability information satisfies the preset condition is determined as the target management object. In other cases, if the number of management objects displayed by the trigger account in the historical time period is less than a preset number (for example, a maximum number of products that can be displayed in the showcase), the management object displayed by the trigger account in the historical time period may be determined as the target management object, and the adaptation information of the candidate management object is obtained from the candidate management object set according to the popularity information of the candidate management object other than the target management object that has been determined, and then a candidate management object of which adaptation information satisfies the preset condition is also determined as the target management object.

S203: displaying the target management object on an object display page.

The object display page is a page for displaying a target management object. In some examples, the object display page may be a Graphical User Interface (GUI). The object display page may include multiple display positions, each of which may be used to display a target management object.

Considering that a number of target management objects may exceed a number of display positions on the object display page, a display mode of the target management objects on the object display page may also be determined according to the number of target management objects. For example, when the number of target management objects is greater than the number of display positions, the target management objects may be displayed in a carousel manner. Where, the carousel manner may be to group the target management objects and then display them in turn on the object display page according to a grouping result. For example, the object display page (such as a window page) includes 5 display positions, and there includes 30 target management objects to be displayed. Then, the 30 target management objects may be divided into 6 groups, and one group of target management objects may be displayed every 1 minute. For another example, when the number of target management objects is less than or equal to the number of display positions, the target management objects may be displayed in a static display mode. Where, the static display mode may be to display the target management objects in a fixed display position.

S204: acquiring target interaction information of the target management object.

The target interaction information may be interactive behavior information acquired for the target management object during a display process of the target management object on the object display page. Where the interactive behavior may be one or more of a display behavior, a collection behavior, a sharing behavior, a transaction behavior, and an evaluation behavior for the target management object. Accordingly, the interactive behavior information may include one or more of a number of displays (exposures), a number of collections, a number of shares, transaction information, and evaluation information. Where the transaction information may include one or more of the number of transactions and a number of successful transactions (also referred to as a transaction volume), and the evaluation information may include one or more of the number of evaluations and a number of favorable reviews.

For each interactive behavior, the interactive behavior information may be determined based on a behavior event corresponding to the interactive behavior. Taking the collection behavior as an example, the number of collections of each target management object may be initialized first, for example, the number of collections may be initialized to 0. Each time a behavior event is received, an event type of the behavior event may be obtained. If the event type is to collect, an object identifier of the target management object in the behavior event is obtained, and then the number of collections of the corresponding target management object is increased by one according to the object identifier to obtain an updated number of collections.

S206: determining a management result of the target management object according to the target interaction information of the target management object.

The management result of the target management object may be a result of automatic management of the target management object. Where the management result may include management basis information, a result indicator item and management object information. The management basis information may include a management state, for example, the management state may be an automatic management (also referred to as hosting) state or a non-automatic management state (for example, a state of ending the hosting). The management basis information may also include automatic management time (such as hosting time). The result indicator item is an indicator item obtained by processing the target interaction information and used to measure the management result. For example, the result indicator item may include one or more of a transaction amount determined according to the number of successful transactions and a unit price of each target management object, a number of transaction orders determined according to the number of successful transactions of each target management object, an estimated income determined according to the number of successful transactions of each target management object and an expected rate of return of each target management object, or a favorable evaluation rate determined according to the number of evaluations and a number of favorable reviews. The management object information may include description information of the management object. For example, the description information of the management object may include one or more of a name and an image of the management object. Further, the description information of the management object may further include a performance parameter and a price.

When the management result is being determined, considering that the target interaction information may be of multiple types, the target interaction information of the target management object may be classified first according to the preset multiple information types to obtain the target interaction information corresponding to the various information types. For each information type, the management result corresponding to the information type may be determined according to the target interaction information corresponding to the information type, and then the management result corresponding to various information types is used as the management result of the target management object.

The information type refers to a category to which the information belongs. According to different classification methods, the information type may be different. In some examples, the preset information type may include an evaluation information type and a transaction information type. Accordingly, the number of transactions, the number of successful transactions (transaction volume), and the number of exposures of the target management object may be classified as the target interaction information corresponding to the transaction information type; and the number of evaluations and the number of favorable reviews of the target management object may be classified as the target interaction information corresponding to the evaluation information type. Hereinafter, information processing may be performed according to the target interaction information corresponding to each information type and a processing rule of the target interaction information corresponding to each information type, so as to obtain the management result corresponding to each information type. For example, the processing rule of the target interaction information of the transaction information type may include determining a product of the number of successful transactions of each target management object and a corresponding unit price, and then performing a sum operation to obtain a transaction amount. For another example, the processing rule of the target interaction information of the evaluation information type may include determining a ratio of the number of favorable reviews to the number of evaluations as the favorable evaluation rate. The management result of the target management object may be obtained based on the management result corresponding to each information type.

The management result of the target management object may be displayed on the result display interface. The result display interface includes a basic information display region, an indicator item display region, and a management object display region. In this way, when the management result is being displayed, the management basis information may be displayed in the basic information display region, the result indicator item may be displayed in the indicator item display region, and the management object information may be displayed in the management object display region.

In some possible implementations, a result display condition may also be set. For example, the result display conditions may be that a result display shortcut key is triggered, a result display control is triggered, and a result display voice instruction is triggered. In response to the trigger operation satisfying the result display condition, the management result of the target management object is displayed on the result display interface.

When the automatic management (hosting) operation is triggered and the target management object is in a managed state, a manual management operation may also be rejected. Specifically, an adjustment operation for the target management object is received, such as an operation to remove the target management object from the result display interface. If the target management object is in a managed state, in response to the adjustment operation, prompt information is displayed on the result display interface, and the prompt information includes adjustment failure information.

The embodiment of the present disclosure also supports replacement of the displayed target management object. Specifically, if the display time of the target management object on the object display page satisfies a preset duration, a target management object to be replaced and a replacement candidate object are determined according to the target interaction information of the target management object, and the target management object to be replaced is replaced with the replacement candidate object on the object display page. Where, the preset duration may be set according to an experience value, for example, it may be set to one day or one week.

When the replacement candidate object is being determined, an evaluation indicator value corresponding to the target management object may be determined according to the target interaction information of the target management object. The evaluation indicator value may be an indicator value determined based on the target interaction information and used to evaluate a display effect of the target management object. For example, the evaluation indicator value may include an exposure transaction rate determined according to the number of exposures and the transaction volume. Then a target management object of which evaluation indicator value satisfies the condition of the object to be replaced may be used as the target management object to be replaced. Where, the condition of the object to be replaced is a condition for determining whether the target management object is the target management object to be replaced. For example, the condition of the object to be replaced may be set to an evaluation indicator value less than a preset value, and a ranking of the evaluation indicator value is outside a preset ratio. In this way, after the evaluation indicator value is determined, the evaluation indicator value is compared with the preset value, or the evaluation indicator value is sorted to obtain a ranking (which may be expressed by a ratio), and the ranking is compared with the preset ratio to determine the target management object to be replaced. Next, according to the target interaction information of the target management object, a replacement candidate object is determined from the candidate management object set.

Determining the replacement candidate object from the candidate management object set may be to determine the replacement candidate object based on object attribute information of the candidate management object in the candidate management object set. The object attribute information may include object popularity information and historical interactive behavior information of the trigger account. In this way, the adaptation information of the candidate management object in the candidate management object set may be obtained first according to the object popularity information of the candidate management object in the candidate management object set and the historical interactive behavior information of the trigger account. The candidate management object of which adaptation information satisfies a preset condition is determined as a replacement candidate object. It should be noted that in order to avoid unnecessary overhead caused by repeated calculations, the target management object (including a target management object that needs to be retained and a target management object that needs to be replaced) in the candidate management object set may also be deleted.

Based on the above description, an embodiment of the present disclosure provides an object management method. The method involves automatically determining a target management object in response to a management trigger operation, and displaying the target management object on an object display page, and then acquiring interactive behavior information for the target management object during a display process of the target management object, that is, target interaction information, and determining a management result based on the target interaction information. In this way, automatic management of the object may be implemented without the need for the user to manually add and analyze the management object, which saves time and labor and can meet different business needs.

Hereinafter, the object management method provided by the present disclosure will be described in combination with specific application scenarios.

In a live broadcast scenario, a live broadcast application provides a product showcase. A user (for example, an anchor) may manually add a product to the product showcase and show the product in the product showcase to other users, thereby helping to sell the product. Considering efficiency and cost issues, the user may also trigger a management operation, and a server (also referred to as a platform) will host the product showcase, which may greatly reduce time and labor costs and meet business needs.

In a specific implementation, the anchor may trigger the management operation through a client of the live broadcast application (for example, the first client 200) to start product hosting. The server may determine a target management object, for example, a target product, in response to the trigger management operation.

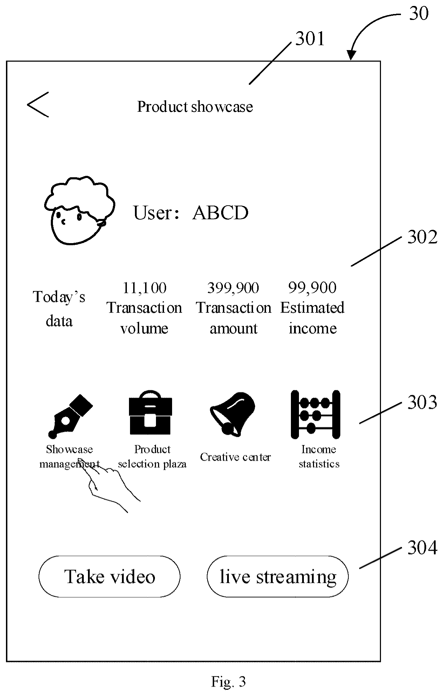

The client of the live broadcast application displays a product management interface, and the anchor may trigger a management operation through the product management interface. Referring to a schematic diagram of a product management interface shown in Fig. 3, the product management interface 30 may include a title region 301, an information presentation region 302, a function module region 303, and a quick function control 304.

The title region 301 may display a module title of the function module currently displayed by the live broadcast application. For example, the module title may be "product showcase". The product showcase module may provide the anchor with multiple sub-function modules related to product management, and display the multiple sub-function modules in the function module region 303 for the anchor to choose. For example, the sub-function modules may include showcase management, product selection plaza, creative center and income statistics. The anchor may enter a sub-function module by clicking an icon of the sub-function module to implement a function corresponding to the function module.

The information presentation region 302 may display the anchor's account information. For example, the account information may include the anchor's avatar, name, and transaction information facilitated by the anchor's product recommendation through the product showcase module. The quick function control 304 refers to a shortcut key for implementing a corresponding function, and the corresponding function may be implemented without the user jumping to other modules or applications. In this example, the quick function control 304 may include a video shooting control and a live broadcast control. For example, the anchor may directly start a live broadcast by clicking the live broadcast control in the quick function control 304, and the anchor may introduce the products in the product showcase during the live broadcast.

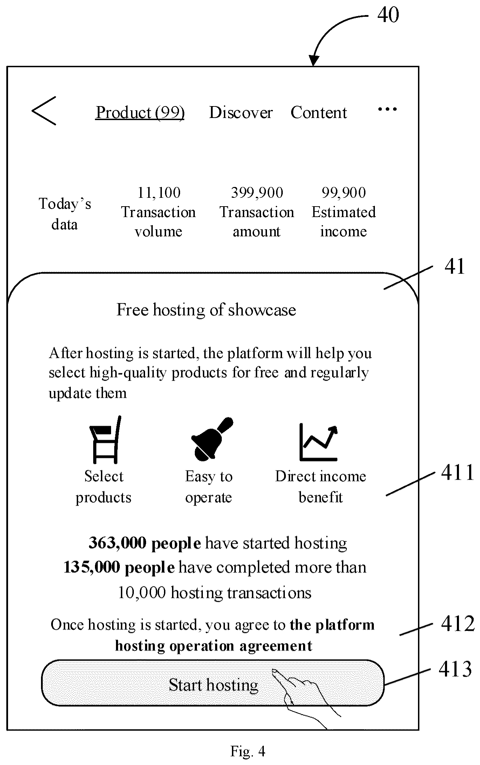

In some embodiments, the anchor may trigger a sub-function module "showcase management" in the function module region 303 to enter a showcase management interface. In the showcase management interface, relevant information about the product hosting may be displayed so that the anchor can start the product hosting. Referring to a schematic diagram of a showcase management interface shown in Fig. 4, a showcase management interface 40 may carry a hosting start window 41, and the anchor may start the product hosting by triggering the hosting start window 41.

Specifically, the hosting start window 41 may include a hosting service introduction region 411, a hosting prompt region 412, and a hosting start control 413. In the hosting service introduction region 411, a function introduction of the hosting service may be displayed so that the anchor can understand the product hosting function to attract the anchor to start the product hosting. The hosting service introduction region 411 may also display usage information of the hosting service, such as a number of people using the hosting service, and a number of people using the hosting service to achieve a preset goal (for example, a number of people of which hosting transactions exceed 10,000).

The hosting prompt region 412 may display prompt information about the product hosting. It is appreciated that if the anchor starts the product hosting, the server may obtain and use the anchor's account information, such as the account type, for the product hosting. Therefore, before the anchor starts the product hosting, prompt information about the product hosting may be displayed to prompt the user with the following information: "Once hosting is started, you agree to the platform hosting operation agreement." The user may view the specific content of the agreement by clicking on the "Platform Hosting Operation Agreement", where the agreement may include information such as the type of information involved in the product hosting, scope of use, and usage scenarios. In this way, when the anchor starts the product hosting, the account information obtained by the server may be regarded as authorized account information.

The hosting start control 413 may be used to start the product hosting. Specifically, the anchor may start the product hosting by triggering the hosting start control 413, and the server determines the target product in response to the product hosting trigger operation (management trigger operation in the live broadcast scenario).

In some embodiments, the anchor's product showcase includes stock products. For example, the product showcase includes products that the anchor manually selects and adds before starting the product hosting. In this case, the anchor may also be presented with product replacement reminder information to inform the anchor that a product in the product showcase will be replaced with a target product. For example, the client may display the product replacement reminder information in the form of a pop-up window, and content of the product replacement reminder information may be "After starting the hosting, the platform will intelligently replace products in the current showcase". In other embodiments, there is no product in the anchor's product showcase. At this time, the client may directly display the target product.

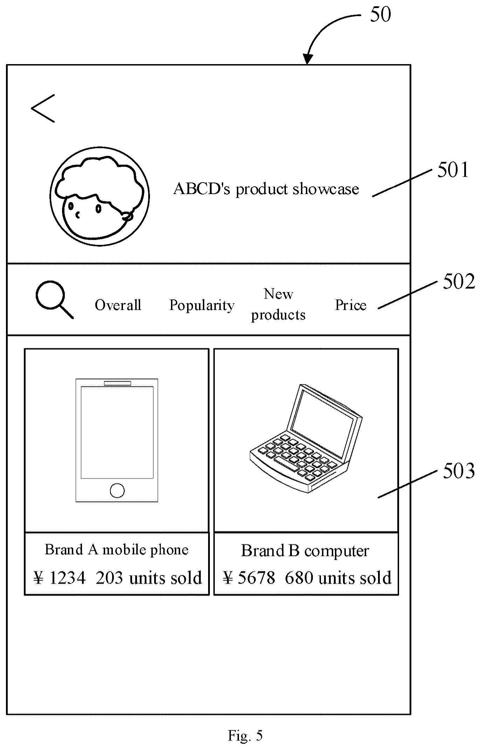

In the live broadcast scenario, the target product is displayed on a product display page (the object display page in the live broadcast scenario). Referring to a schematic diagram of a product display page shown in Fig. 5, a product display page 50 may display the anchor's target product, so that the user can view the target product.

Specifically, the product display page 50 may include an anchor information display region 501, an order adjustment region 502, and a target product display region 503. Where, the anchor information display region 501 may be used to display the anchor's account information, for example, the anchor's account information may include an account avatar and an account name. The order adjustment region 502 may be used to adjust a display order of the target products. For example, the display order of the target management objects may be displaying in a comprehensive sorting order, in a popularity sorting order, in an on-shelf time sorting order, or in a price order. The target product display region 503 may be used to display the target product, for example, it may display the target product's picture, the target product's name, the target product's selling price, and the target product's sales volume.

In some possible implementations, the anchor may also share the product showcase so that more users can view the target products in the product showcase, thereby providing more help for product sales. Specifically, when the anchor starts product hosting, the showcase management interface 40 may display relevant information about the sharing of the product showcase.

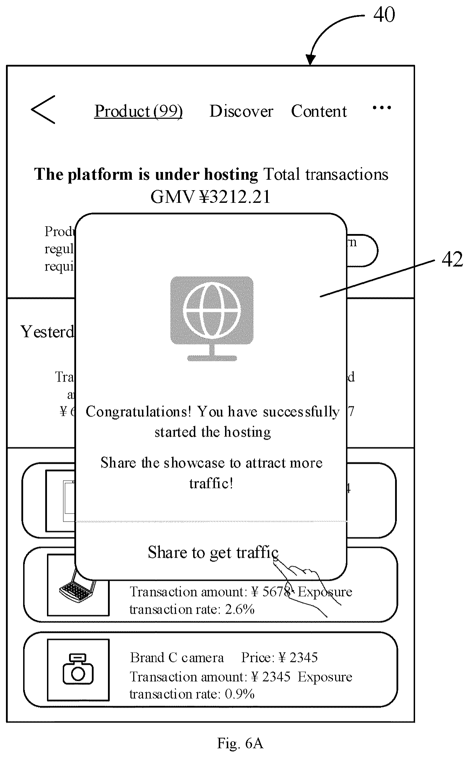

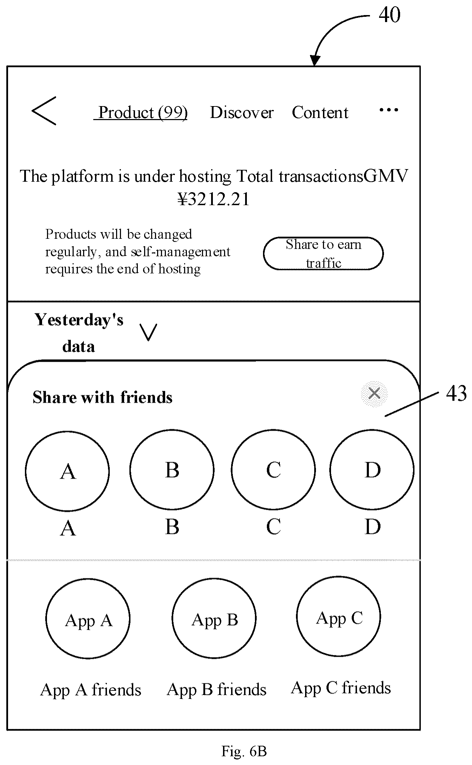

Referring to a schematic diagram of a product showcase sharing interface shown in Fig. 6A and Fig. 6B. In Fig. 6A, the showcase management interface 40 may include a showcase sharing pop-up window 42, which may display information indicating that the product hosting is successfully started and display a share control.

When the anchor triggers the share control, referring to Fig. 6B, the showcase management interface 40 may display a share configuration window 43 through a pop-up window, and the anchor may share the product showcase with a designated user or user group (usually a friend in the application, or a friend in other applications) through the share configuration window 43. For example, the anchor may share the product showcase with a friend A, B, C or D in the e-commerce APP through the share configuration window 43, or may share the product showcase with friends in other applications (such as application A, application B or application C).

Further, after the anchor closes the share configuration window 43, the showcase management interface 40 may display information about ending the product hosting to the anchor. For example, the client may use an extender control "..." in the upper right corner of the showcase management interface 40 to prompt the anchor to end the hosting through the extender control "..." in the form of a bubble, so that the anchor may trigger an end hosting operation when he wants to end it.

Hereinafter, the server may obtain the target interaction information of the target product during the display process of the product display page 50, and determine the management result of the target product according to the target interaction information of the target product. In order to facilitate the anchor to understand the result of the product hosting, the client may display the management result of the target product on the result display interface.

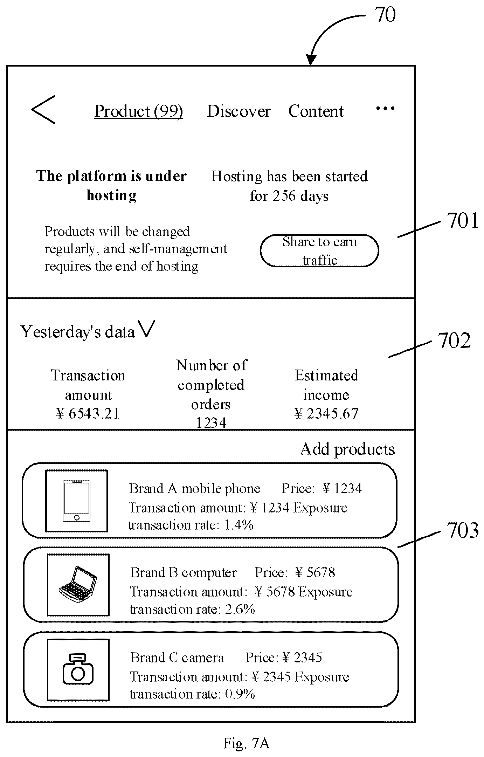

In some embodiments, when the anchor triggers an operation of viewing the management result, the management result of the target product may be displayed on the showcase management interface. See Fig. 7A for a schematic diagram of a result display interface. A result display interface 70 may include a basic information display region 701, a result indicator item display region 702, and a target product display region 703 (the management object display region in the live broadcast scenario). The basic information display region 701 may be used to display management basis information, the result indicator item display region 702 may be used to display a result indicator item, and the target product display region 703 may be used to display product information of the target product.

In the basic information display region 701, a management state (such as a hosting state) may be displayed. When the management state is the hosting state, the client may also display a hosting time in the basic information display region 701.

In the result indicator item display region 702, multiple result indicator items included in the management result of the target product may be displayed. For example, the result indicator items may include a transaction amount, a number of completed orders, and an estimated revenue.

In the target product display region 703, the target products may be displayed. For easy viewing, the target products may be displayed in the form of a list in the target product display region 703. For example, the target product display region 703 may display information such as a thumbnail, a name, a selling price, a transaction amount, and an exposure transaction rate of the target product, so as to quickly obtain information about each target product.

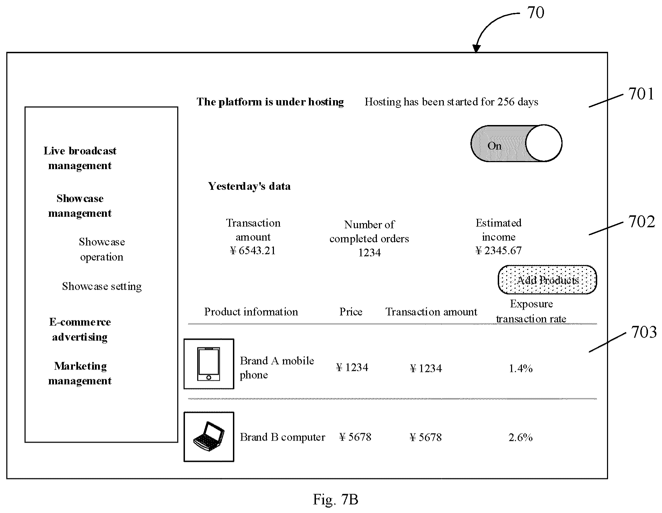

It should be noted that Fig. 7A is an example of a result display interface when the client is a smartphone client. In other possible implementations of the embodiment of the present disclosure, the result display interface may also be displayed on other types of clients such as a personal computer (PC). Fig. 7B also shows a schematic diagram of a result display interface when the client is a PC client. The content or control carried by the result display interface 70 in Fig. 7B is similar to the content or control carried by the result display interface 70 shown in Fig. 7A. The only difference is the form or layout, which will not be repeated here.

It should be noted that the result display interface 70 may further include a hosting end control. The anchor may trigger an end hosting operation through the hosting end control.

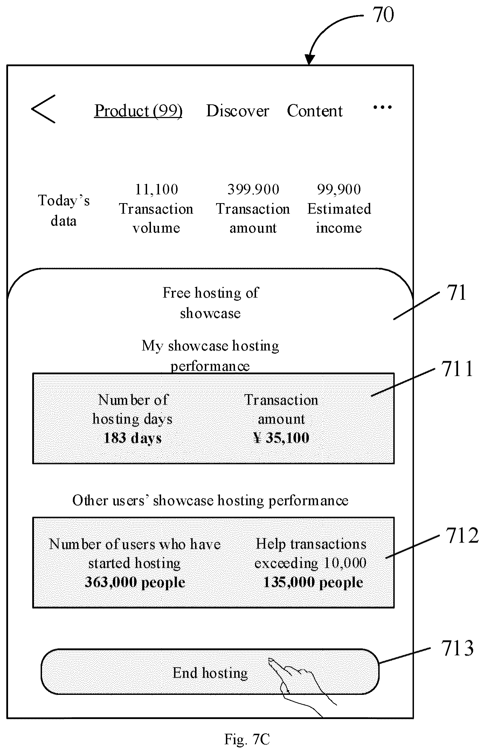

In an example of Fig. 7A, the anchor may click on an extender control "...", and the client may display a drop-down menu in response to the operation, and the anchor may select an "end hosting" menu item from the drop-down menu, thereby triggering the end hosting operation. It should be noted that after the anchor selects the "end hosting" menu item, the client may also jump to an end hosting window 71 shown in Fig. 7C, and the end hosting window 71 displays the current user's hosting service usage information 711 and other users' hosting service usage information 712. Where, the current user's hosting service usage information 711 includes a usage time and a transaction amount, and the other users' hosting service usage information 712 includes a number of people using the hosting service and a number of people who helped to make transactions exceeding 10,000. The above current user's hosting service usage information 711 and other users' hosting service usage information 712 may provide a reference for the user to decide whether to end the hosting. The end hosting window 71 further includes an end hosting control 713. When the user still wants to end the hosting after viewing the hosting service usage information 711 and the hosting service usage information 712, the end hosting control 713 may be triggered, thereby triggering the end hosting operation. The server may end the hosting in response to the end hosting operation.

In an example of Fig. 7B, the hosting start control and the hosting end control are integrated into one control. When the control is clicked, the hosting start may be switched to the hosting end, or the hosting end may be switched to the hosting start. For example, when the management state is a hosting state, the control is clicked, and the hosting start may be switched to the hosting end, thereby triggering the end hosting operation.

Furthermore, the result display interface 70 may further include an add control. The anchor may add a product through the add control. It should be noted that when the hosting is started, the above add control is in a deactivated state. Even if the user clicks the add control, the product cannot be added, instead it is the server that determines to replace the product. When the hosting is ended, the user may click the add control to add the product to the showcase.

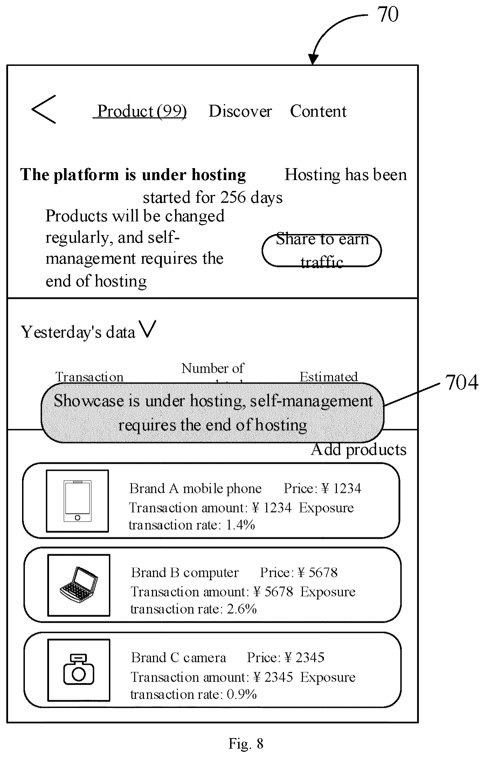

When the hosting is started, the product in the product showcase are in a managed state. If the anchor clicks the add control to trigger an adjustment operation such as adding a product, the client may also display prompt information on the result display interface 70 in response to the adjustment operation. Referring to a schematic diagram of the result display interface 70 shown in Fig. 8, the result display interface 70 further includes a pop-up prompt 704, and the pop-up prompt 704 may include prompt information, which includes adjustment identification information, such as "the showcase is being hosted, and the adjustment requires the end of the hosting".

In the embodiment of the present disclosure, the live broadcast application may automatically determine a target product displayed in the product showcase by providing a product management function, and display the target product on the product display page, and then acquire interactive behavior information for the target product during a display process to manage the target product, and display a management result of the target product on the result display interface. Since there is no need to manually select the product in the product showcase, there is no need to manually replace the product in the product showcase, which saves time and labor and meets the business needs.

The object management method provided by the embodiment of the present disclosure is described in detail above in conjunction with FIGS. 1 to 8. The following will describe an apparatus and a device provided by embodiments of the present disclosure in conjunction with the accompanying drawings.

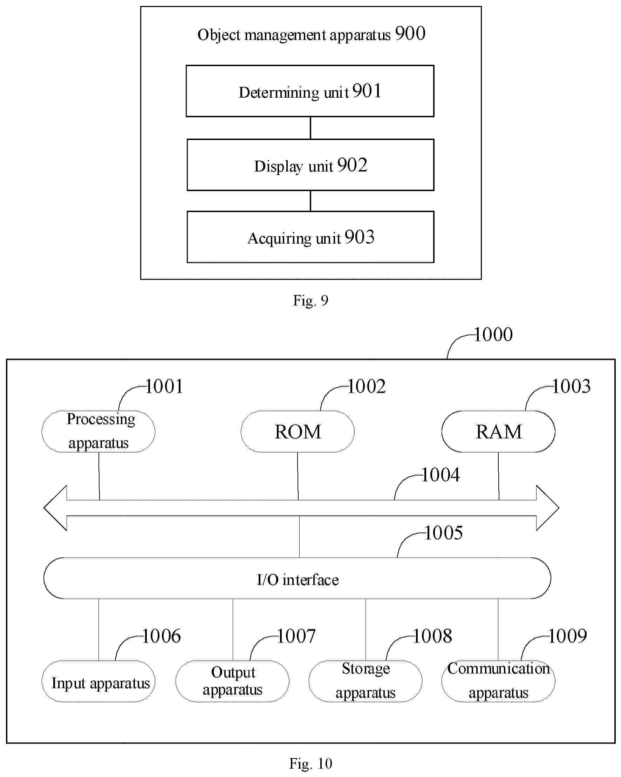

Referring to a structural diagram of an object management apparatus shown in Fig. 9, the object management apparatus may be a software apparatus, which is deployed in a terminal to implement the object management method corresponding to the embodiment shown in Fig. 2. In some embodiments, the object management apparatus may also be a hardware apparatus, and the apparatus 900 includes:
a determining unit 901, configured to determine a target management object in response to a management trigger operation;
a display unit 902, configured to display the target management object on an object display page;
an acquiring unit 903, configured to acquire target interaction information of the target management object; where the target interaction information is interactive behavior information acquired for the target management object during a display process of the target management object on the object display page; and
the determining unit 901, further configured to determine a management result of the target management object according to the target interaction information of the target management object.

In some possible implementations, the determining unit 901 is specifically configured to:
determine a candidate management object set according to an account type of a trigger account corresponding to the management trigger operation; and
determine the target management object according to object attribute information of a candidate management object in the candidate management object set; where the target management object is at least one candidate management object in the candidate management object set.

In some possible implementations, the determining unit 901 is specifically configured to:
determine a target object type corresponding to the account type of the trigger account according to the account type of the trigger account corresponding to the management trigger operation; and
take the candidate management object belonging to the target object type as the candidate management object set.

In some possible implementations, the object attribute information includes: object popularity information and historical interactive behavior information of the trigger account; the determination unit 901 is specifically configured to:
obtain adaptability information of the candidate management object in the candidate management object set according to the object popularity information and the historical interactive behavior information of the trigger account of the candidate management object in the candidate management object set; where the adaptation information of the candidate management object reflects an adaptation degree of the candidate management object and the trigger account; and
determine the candidate management object of which adaptation information satisfies a preset condition as the target management object.

In some possible implementations, the display unit 902 is further configured to:
in response to the trigger operation satisfying a result display condition, display the management result of the target management object on a result display interface;
the management result of the target management object includes: management basis information, a result indicator item, and management object information, and the result display interface includes: a basic information display region, an indicator item display region and a management object display region; the displaying the management result of the target management object on a result display interface, includes: displaying the management basis information in the basic information display region, displaying the result indicator item in the indicator item display region, and displaying the management object information in the management object display region.

In some possible implementations, the determining unit 901 is specifically configured to:
classify the target interaction information of the target management object according to a plurality of preset information types to obtain the target interaction information corresponding to various information types;
for each information type, determine the management result corresponding to the information type according to the target interaction information corresponding to the information type; and
take a management result corresponding to the various information types as the management result of the target management object.

In some possible implementations, the apparatus further includes:
a prompt unit, configured to receive an adjustment operation for the target management object; and if the target management object is in a managed state, in response to the adjustment operation, display prompt information on the result display interface, the prompt information including adjustment failure information.

In some possible implementations, the apparatus further includes:
a replacement unit, configured to, if a display time of the target management object on the object display page satisfies a preset duration, determine a target management object to be replaced and a replacement candidate object according to the target interaction information of the target management object.

The display unit 902 is further configured to: replace the target management object to be replaced with the replacement candidate object on the object display page.

In some possible implementations, the replacement unit is specifically configured to: determine an evaluation indicator value corresponding to the target management object according to the target interaction information of the target management object;
take a target management object of which evaluation indicator value satisfies a condition of the object to be replaced as the target management object to be replaced; and
determine the replacement candidate object from the candidate management object set according to the target interaction information of the target management object.

The object management apparatus 900 according to the embodiment of the present disclosure may correspond to the method described in the embodiment of the present disclosure, and the above and other operations and/or functions of each module/unit of the object management apparatus 900 are respectively for implementing the corresponding processes of each method in the embodiment shown in Fig. 2, which will not be repeated here, for the sake of brevity.

An embodiment of the present disclosure further provides an electronic device 1000. The electronic device 1000 is specifically used to implement the function of the object management apparatus 900 in the embodiment shown in Fig. 9.

Fig. 10 provides a structural schematic diagram of an electronic device 1000. As shown in Fig. 10, the electronic device 1000 may include a processing apparatus (e.g., a central processing unit, a graphic processing unit, etc.) 1001, which may perform various appropriate actions and processes according to a program stored in a read-only memory (ROM) 1002 or a program loaded from a storage apparatus 1008 into a random access memory (RAM) 1003. Various programs and data required for the operation of the electronic device 1000 are also stored in the RAM 1003. The processing apparatus 1001, the ROM 1002, and the RAM 1003 are connected to each other via a bus 1004. An input/output (I/O) interface 1005 is also connected to the bus 1004.

Typically, the following apparatuses may be connected to the I/O interface 1005: an input apparatus 1006 including, for example, a touch screen, a touchpad, a keyboard, a mouse, a camera, a microphone, an accelerometer, a gyroscope, etc.; an output apparatus 1007 including, for example, a liquid crystal display (LCD), a speaker, a vibrator, etc.; the storage apparatus 1008 including, for example, a magnetic tape, a hard disk, etc.; and a communication apparatus 1009. The communication apparatus 1009 may allow the electronic device 1000 to communicate with other devices wirelessly or by wire to exchange data. Although Fig. 10 shows the electronic device 1000 with various apparatuses, it should be understood that it is not required to implement or have all the apparatuses shown. Alternatively, more or fewer apparatuses may be implemented or included.

An embodiment of the present disclosure further provides a computer-readable storage medium. The computer-readable storage medium may be any available medium that can be stored by a computing device or a data storage device such as a data center that includes one or more available media. The available medium may be a magnetic medium (e.g., a floppy disk, a hard disk, a tape), an optical medium (e.g., a DVD), or a semiconductor medium (e.g., a solid-state hard disk). The computer-readable storage medium includes instructions, which instruct the computing device to execute the object management method applied to the object management device 900.

An embodiment of the present disclosure further provides a computer program product, which includes one or more computer instructions. When the computer instructions are loaded and executed on a computing device, the processes or functions described in the embodiment of the present disclosure is generated in whole or in part.

The computer instructions may be stored in a computer-readable storage medium, or transmitted from one computer-readable storage medium to another computer-readable storage medium. For example, the computer instructions may be transmitted from one website, computer or data center to another website, computer or data center by wire (e.g., a coaxial cable, an optical fiber, a digital subscriber line (DSL)) or wirelessly (e.g., infrared, radio, microwave, etc.).

When the computer program product is executed by a computer, the computer executes any of the aforementioned page display methods. The computer program product may be a software installation package. When any of the aforementioned page display methods is required, the computer program product may be downloaded and executed on a computer.

Descriptions of the processes or structures corresponding to the above accompanying drawings each have their own emphases. For what are not described in detail in a process or structure, please refer to the relevant descriptions of other processes or structure.

## Claims

1. An object management method, comprising:
in response to a management trigger operation, determining a target management object, and displaying the target management object on an object display page;
acquiring target interaction information of the target management object; wherein the target interaction information is interactive behavior information acquired for the target management object during a display process of the target management object on the object display page; and
determining a management result of the target management object according to the target interaction information of the target management object.

2. The method according to claim 1, wherein the determining a target management object comprises:
determining a candidate management object set according to an account type of a trigger account corresponding to the management trigger operation; and
determining the target management object according to object attribute information of a candidate management object in the candidate management object set; wherein the target management object is at least one candidate management object in the candidate management object set.

3. The method according to claim 2, wherein the determining a candidate management object set according to an account type of a trigger account corresponding to the management trigger operation comprises:
determining a target object type corresponding to the account type of the trigger account according to the account type of the trigger account corresponding to the management trigger operation; and
taking the candidate management object belonging to the target object type as the candidate management object set.

4. The method according to claim 2 or 3, wherein the object attribute information comprises: object popularity information and historical interactive behavior information of the trigger account; and the determining the target management object according to object attribute information of a candidate management object in the candidate management object set comprises:
obtaining adaptation information of the candidate management object in the candidate management object set according to the object popularity information and the historical interactive behavior information of the trigger account of the candidate management object in the candidate management object set; wherein the adaptation information of the candidate management object reflects an adaptation degree of the candidate management object and the trigger account; and
determining the candidate management object of which adaptation information satisfies a preset condition as the target management object.

5. The method according to claim 1, further comprising:
in response to the trigger operation satisfying a result display condition, displaying the management result of the target management object on a result display interface;
wherein the management result of the target management object comprises: management basis information, a result indicator item, and management object information, and the result display interface comprises: a basic information display region, an indicator item display region and a management object display region; the displaying the management result of the target management object on a result display interface, comprises: displaying the management basis information in the basic information display region, displaying the result indicator item in the indicator item display region, and displaying the management object information in the management object display region.

6. The method according to claim 1 or 5, wherein the determining a management result of the target management object according to the target interaction information of the target management object comprises:
classifying the target interaction information of the target management object according to a plurality of preset information types to obtain the target interaction information corresponding to various information types;
for each information type of the various information types, determining the management result corresponding to the information type according to the target interaction information corresponding to the information type; and
taking a management result corresponding to the various information types as the management result of the target management object.

7. The method according to claim 5, further comprising:
receiving an adjustment operation for the target management object; and
when the target management object is in a managed state, in response to the adjustment operation, displaying prompt information on the result display interface, the prompt information comprising adjustment failure information.

8. The method according to claim 2, further comprising:
when a display time of the target management object on the object display page satisfies a preset duration,
determining a target management object to be replaced and a replacement candidate object according to the target interaction information of the target management object; and
replacing the target management object to be replaced with the replacement candidate object on the object display page.

9. The method according to claim 8, wherein the determining a target management object to be replaced and a replacement candidate object according to the target interaction information of the target management object comprises:
determining an evaluation indicator value corresponding to the target management object according to the target interaction information of the target management object;
taking a target management object of which evaluation indicator value satisfies a condition of the object to be replaced as the target management object to be replaced; and
determining the replacement candidate object from the candidate management object set according to the target interaction information of the target management object.

10. The method according to claim 9, wherein the determining the replacement candidate object from the candidate management object set comprises:
determining the replacement candidate object according to the object attribute information of the candidate management object in the candidate management object set.

11. The method according to any one of claims 1 to 10, wherein the management trigger operation comprises at least one of the following: an operation of clicking a management control by a mouse, an operation of touching the management control, a shortcut key operation, and a voice command trigger operation.

12. An object management apparatus, comprising:
a determining unit, configured to, in response to a management trigger operation, determine a target management object;
a display unit, configured to display the target management object on an object display page;
an acquiring unit, configured to acquire target interaction information of the target management object;
wherein the target interaction information is interactive behavior information acquired for the target management object during a display process of the target management object on the object display page; and the determining unit, further configured to determine a management result of the target management object according to the target interaction information of the target management object.

13. An electronic device, comprising a processor and a memory, wherein,
the processor is configured to execute instructions stored in the memory such that the electronic device performs the method according to any one of claims 1 to 11.

14. A computer-readable storage medium comprising instructions, wherein the instructions indicate the electronic device to perform the method according to any one of claims 1 to 11.

15. A computer program product, wherein the computer program product, when running on an electronic device, causes the electronic device to perform the method according to any one of claims 1 to 11.
